(19) Europäisches Patentamt
European Patent Office
Office européen des brevets

(11) Veröffentlichungsnummer: **0 277 553**
**A2**

(12) **EUROPÄISCHE PATENTANMELDUNG**

(21) Anmeldenummer: **88100854.4**

(22) Anmeldetag: **21.01.88**

(51) Int. Cl.⁴: **C08F 297/08**

(30) Priorität: **03.02.87 DE 3703038**

(43) Veröffentlichungstag der Anmeldung:
**10.08.88 Patentblatt 88/32**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Ostoja Starzewski, Karl-Heinz Aleksander, Dr.**
**Jeschkenweg 10**
**D-6368 Bad Vilbel(DE)**
Erfinder: **Langstein, Gerhard, Dr.**
**Leo-Fahlenbock-Strasse 38**
**D-5067 Kürten-Dürscheid(DE)**
Erfinder: **Witte, Josef, Dr.**
**Haferkamp 10**
**D-5000 Köln 80(DE)**

(54) **Verzweigte Niederdruckpolyolefine und Verfahren zu ihrer Herstellung.**

(57) Neue verzweigte Niederdruckpolyolefine mit Polyethenästen werden hergestellt durch Oligomerisation bzw. Polymerisation von ethen an einem Ni-haltigen Katalysator und Co-Polymerisation des so erhaltenen Ethen-Polymerisates mit kurzkettigen α-Olefinen an einem Cr-haltigen Katalysator.

EP 0 277 553 A2

Xerox Copy Centre

## Verzweigte Niederdruckpolyolefine und Verfahren zu ihrer Herstellung

Die Erfindung betrifft verzweigte Niederdruckpolyolefine und Verfahren zu ihrer Herstellung.

Polyethene werden üblicherweise in 3 Gruppen eingeteilt. Unter HDPE versteht man lineares Polyethen mit einer Dichte von 0,96 bis 0,97 g/cm$^3$. Lineare Ethenpolymerisate mit niedrigerer Dichte werden durch Copolymerisation von Ethen mit $\alpha$-Olefinen wie z.B. 1-Buten oder 1-Octen hergestellt und als LLDPE bezeichnet. Als LDPE bezeichnet man langkettenverzweigte Polymerisate niedriger Dichte, die üblicherweise durch Homopolymerisation von Ethen mit freie Radikale bildenden Katalysatoren unter sehr hohem Druck (>1000 bar) und bei hohen Temperaturen hergestellt werden.

Bekannte Verfahren zur Herstellung von Polyethenen sind beispielsweise das "Ziegler-Natta-Verfahren" und das Hochdruckverfahren. Niederdruckpolyethene HDPE und LLDPE werden hergestellt mit Übergangsmetallkatalysatoren, gegebenenfalls mit Mischungen davon. Aus der DE-Patentschrift 2 660 510 ist ein Verfahren bekannt geworden, bei dem Mischpolymerisate aus Ethen und $C_3$-bis $C_6$-1-Olefin mit erniedrigter Dichte und einem Schmelzindex bis 2.0 durch Polymerisation von Ethen mit mindestens einem $C_3$-bis $C_6$-1-Olefin unter relativ niedrigem Druck und unter Verwendung von Chrom und Titan enthaltenden Trägerkatalysatoren, die in Luft oder Sauerstoff bei einer Temperatur von 300 bis 900°C aktiviert worden sind, bezogen auf das Gesamtgewicht des Trägerkatalysators 0,05 bis 3,0 Gew.-% Chrom und 1,5 bis 9,0 Gew.-% Titan enthalten und in denen Chrom und Titan nach der Aktivierung in Form von Oxiden vorliegen, dadurch hergestellt werden, daß man mit Hilfe eines Katalysators, der bis zu 2,5 Gew.-% Fluor enthält, Ethen mit einer solchen Menge an 1-Olefin, die ausreicht, um in dem Mischpolymerisat die gewünschte Dichte und einen Gehalt der $C_{3\text{-}6}$-Comonomeren von 1,0 bis 15 Mol-% zu erhalten, in einem Wirbelbettverfahren bei einem $G_{mf}$-Wert von 1,5 bis 10, einer Temperatur von 30 bis 105°C und einem Druck von weniger als 68,7 bar mischpolymerisiert.

Außer solchen Ethen/$\alpha$-Olefin-Copolymerisaten (LLDPE) sind vor allem Ethen/Propan-Copolymere kautschukartiger Konsistenz bekannt. Die letzteren enthalten einen Propen-Gehalt von 20 - 70 % in statistischer Verteilung.

Der Erfindung liegt die Aufgabe zugrunde, kurzkettenverzweigtes Niederdruckpolyolefin mit Polyethen-Ästen, die vorzugsweise längerkettig sind, und ein Verfahren zur ihrer Herstellung bereitzustellen.

Es wurde nun ein Verfahren zur Herstellung von Niederdruckpolyolefin mit Seitenketten gefunden, welches dadurch gekennzeichnet ist, daß

1. Ethen an einem Ni-haltigen Katalysator oligomerisiert bzw. polymerisiert wird und
2. das so erhaltene Polyethen mit kurzkettigen $\alpha$-Olefinen mit wenigstens 3 C-Atomen an einem Cr-haltigen Katalysator copolymerisiert wird, gegebenenfalls in Gegenwart von Ethen, wobei in Gegewart von Aluminiumorganylen gearbeitet werden kann.

Bevorzugte kurzkettige $\alpha$-Olefine haben 3 bis 10 C-Atome, besonders bevorzugt sind Propen und Buten.

Die Oligomerisation bzw. Polymerisation des Ethens und die Copolymerisation mit kurzkettigen $\alpha$-Olefinen können in getrennten Reaktoren aber auch nacheinander im gleichen Reaktor durchgeführt werden. In einer bevorzugten Ausführungsform befinden sich wenigstens zeitweise der Ni-und der Cr-haltige Katalysator gleichzeitig im Reaktionsraum.

Gegenstand der Erfindung ist weiterhin ein verzweigtes Niederdruckpolyolefin, welches dadurch gekennzeichnet ist, daß das Polyolefin einen oder mehrere verschieden lange Polyethen-Äste aufweist. Das Molekulargewicht liegt vorzugsweise über 2.000 g/mol.

In einer bevorzugten Ausführungsform enthält das Polyolefin gegebenenfalls wiederkehrende Einheiten folgender Struktur

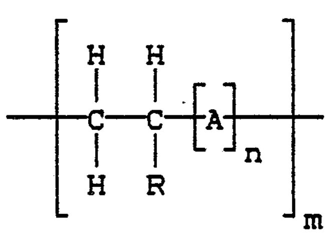

bzw.

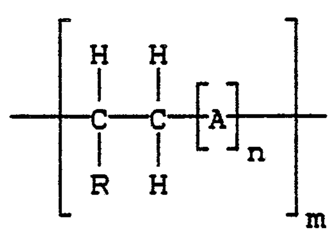

worin bedeuten
R Rest eines Polyethen-Seitenastes, insbesondere mit 4 bis $10^5$ C-Atomen, vorzugsweise mit 10 bis $10^4$ C-Atomen,
A wiederkehrende Strukturen des polymerisierten kurzkettigen $\alpha$-Olefins mit wenigstens 3 C-Atomen oder eines statistischen Ethen-$\alpha$-Olefin-Copolymer,
n ganze Zahl, insbesondere 2 bis $10^5$, besonders bevorzugt von 10 bis $10^4$ und
m ganze Zahl, größer oder gleich 1.

Der Nickel enthaltende Katalysator liegt vorzugsweise als Komplex vor, bei dem wenigstens ein vorzugsweise zweizähniger Ligand Phosphor und Sauerstoff enthält.

Bevorzugte nickelhaltige Katalysatoren sind die folgenden Typen:

1.) Die aus der EP-A 137 389 bekannten Nickelverbindungen, die herstellbar sind durch Reaktion einer Nickel-(O)-Verbindung oder einer Nickelverbindung, die in situ in eine Nickel-(O)-Verbindung übergeführt werden kann mit einem Addukt oder einem Gemisch aus einer chinoiden Verbindung und einem tertiären Phosphin und mit einer Verbindung der Formel (I)

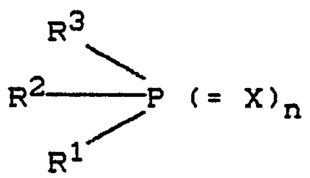

(I)

in der bedeuten
$R^1$, $R^2$ und $R^3$ unabhängig voneinander gegebenenfalls durch Halogen, Hydroxy, $C_1$-$C_{20}$-Alkoxy, Nitro oder $C_6$-$C_{12}$-Aryloxy substituiertes $C_1$-$C_{20}$-Alkyl, $C_2$-$C_{20}$-Alkenyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_6$-$C_{12}$-Aryl-$C_2$-$C_{20}$-alkenyl, $C_1$-$C_{20}$-Alkyl-$C_3$-$C_8$-cycloalkyl und $C_6$-$C_{12}$-Aryl-$C_3$-$C_8$-cycloalkyl, Di-$C_1$-$C_4$-alkylamino, gegebenenfalls substituiertes Phenoxy oder Alkoxy
X O, $NR^4$ oder

X O, $NR^4$ oder 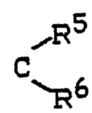

bedeuten,
$R^4$, $R^5$ und $R^6$ unabhängig voneinander Wasserstoff, Silyl, Halogen, Cyano, Nitrophenyl oder $R^1$
n Null oder 1.

Geeignete tertiäre Phosphine entsprechen der Formel (II)

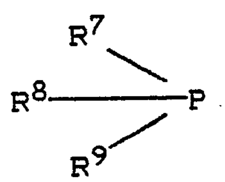

(II)

worin
$R^7$, $R^8$ und $R^9$ unabhängig voneinander, gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy bedeuten.

Als chinoide Verbindungen kommen o-oder p-chinoide Verbindungen der Benzol-und Naphthalinreihe sowie Anthrachinone in Frage, die noch substituiert sein können.

Beispielhaft seien p-Benzochinon, Chloranil, 1,4-Naphthochinon und 9,10-Anthrachinon genannt.

Bevorzugte Reste $R^1$, $R^2$ und $R^3$ sind $C_1$-$C_6$-Alkyl, Cyclohexyl, Phenyl, Tolyl, Benzyl, Di-$C_1$-$C_4$-alkylamino, Phenoxy und Methoxy.

Bevorzugte Reste $R^4$, $R^5$ und $R^6$ sind Wasserstoff, $C_1$-$C_6$-Alkyl, Phenyl, $C_1$-$C_4$-Alkylphenyl, Chlorphenyl, Nitrophenyl, Trimethylsilyl, Chlor und Cyano.

$R^7$, $R^8$, $R^9$ sind vorzugsweise Cyclohexyl, Phenyl, Tolyl, Benzyl, Vinyl und $C_1$-$C_4$-Alkyl.

2.) Die aus der EP-A 101 927 bekannten Nickelverbindungen, herstellbar durch Umsetzung einer Nickel-(O)-Verbindung oder einer Verbindung, die in situ in eine Nickel-(O)-Verbindung überführt werden kann, mit Verbindungen der Formeln (I) und (III)

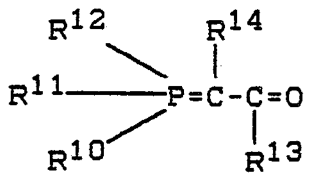

(III)

worin bedeuten

$R^{10}$ -$R^{14}$ unabhängig voneinander, gegebenenfalls durch Halogen, Hydroxy, $C_1$-$C_{20}$-Alkoxy oder $C_6$-$C_{12}$-Aryloxy substitutiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem

$R^{13}$ Wasserstoff,

$R^{14}$ Wasserstoff, Acyl, insbesondere Acetyl oder Benzoyl oder Sulfonat.

$R^{10}$ ist vorzugsweise $C_6$-$C_{12}$-Aryl, $R^{11}$ -$R^{14}$ sind vorzugsweise Cyclohexyl, Phenyl, Tolyl, Benzyl, Vinyl und $C_1$-$C_4$-Alkyl. $R^{13}$ ist bevorzugt Wasserstoff oder $C_1$-$C_4$-Alkoxy, $R^{14}$ bevorzugt Wasserstoff oder Sulfonat.

3.) Nickel-Verbindungen, die durch Reaktion einer Nickel-(O)-Verbindung oder einer Nickelverbindung, die in situ in eine Nickel-(O)-Verbindung übergeführt werden kann, mit einem Addukt oder einem Gemisch aus Maleinsäureanhydrid (MSA) und einem tertiären Phosphin, gegebenenfalls mit einer Verbindung der Formel (I) herstellbar sind.

Geeignete tertiäre Phosphine entsprechen der Formel (I) mit n = Null.

Bevorzugt werden pro Mol Nickel-(O)-Verbindung je 1 bis 4 Mole MSA und des tertiären Phosphins und 0 bis 4 Mole der Verbindung der Formel (I) eingesetzt, besonders bevorzugt pro Mol der Nickel-(O)-Verbindung 1 Mol MSA, sowie tertiäres Phosphin und 1 Mol der Verbindung der Formel (I).

Für die unter 1.) bis 3.) genannten nickelhaltigen Katalysatoren gilt übereinstimmend:

Die Umsetzungstemperatur für die Ni-Katalysatoren beträgt 0 bis 100°C, insbesondere 20 bis 70°C.

Als Nickel-(O)-Verbindungen seien beispielhaft Ni(cyclooctadien)$_2$ und Ni(allyl)$_2$ genannt.

Als Nickelverbindungen, die in situ in Nickel-(O)-Verbindungen überführt werden können, seien beispielsweise aufgeführt: Ni-acetylacetonat, Ni-octanoat und Ni-stearat, die mit Hilfe von üblichen Reduktionsmitteln wie Boranat, Alanat, Aluminiumalkylen oder Lithiumorganylen reduziert werden können.

Die Herstellung des Ni-Katalysators wird unter Ausschluß von Sauerstoff, vorzugsweise in einem Lösungsmittel, das gegenüber den Reaktanden inert sein muß, wie Benzol, Toluol, Cyclohexan und n-Hexan, durchgeführt.

Nach Beendigung der Reaktion kann der Ni-Katalysator ohne Isolierung direkt zur Oligomerisation bzw. Polymerisation von Ethen eingesetzt werden. Das Reaktionsge misch kann auch filtriert werden, wobei das Filtrat, das den Katalysator enthält, zur Oligomerisation bzw. Polymerisation eingesetzt werden kann. Der Katalysator kann auch durch Einengen der Reaktionsmischung oder durch Einengen und/oder Abkühlen des Filtrates isoliert werden.

Weitere geeignete nickelhaltige Katalysatoren für die Oligomerisierung sind bekannt aus den niederländischen Patentanmeldungen 70 16 037, 70 16 039, 68 13 667, 70 15 984, den deutschen Offenlegungsschriften 2 062 239, 2 053 758, 1 931 060, 2 264 088, den US-Patentschriften 3 424 816, 3 825 615, 3 737 475, 3 354 236, den belgischen Patenten 7 60 387, 7 58 106, 7 44 304 und dem kanadischen Patent 7 70 655.

Die Menge der verwendeten Nickel-Verbindung ist nicht kritisch. Typische Katalysatorkonzentrationen liegen zwischen $10^{2}$ bis $10^{4}$ Mol pro Liter. Die Menge an Katalysator, bezogen auf Ethen, liegt im Bereich von 0,005 bis 10 Gew.-%, vorzugsweise 0,01 bis 0,1 Gew.-%.

Alle 3 aufgeführten Gruppen von N-Katalysatoren können auch unter Mitverwendung von Organoaluminiumverbindungen eingesetzt werden.

Geeignete Organoaluminiumverbindungen sind z.B. Trialkyl-, Trialkoxy-oder Tri(alkyl, alkoxy)-aluminiumverbindungen, in denen die Alkyl-und Alkoxygruppen vorzugsweise 1 bis 4 C-Atome aufweisen.

Für die Oligomerisation bzw. Polymerisation mit den Ni-haltigen Katalysatoren eignen sich folgende Verfahrensweisen:

a) Vorlegen des festen, gelösten oder suspendierten Katalysators (oder seiner Komponenten), Zugabe des Ethens, bei der gewünschten Temperatur

b) Vorlegen des Ethens, Injektion der Katalysator-Lösung bzw. - Suspension (oder seiner Komponenten)

c) kontinuierliches Dosieren der Katalysator-Lösung oder -Suspension (oder seiner Komponenten) bei vorgegebenen gewünschten Polymerisationsbedingungen (Druck, Temperatur) zum Ethen.

Die Oligomerisation bzw. Polymerisation kann in einem Lösungs-bzw. Verdünnungsmittel bzw. Suspensionsmittel durchgeführt, werden, wobei beispielsweise Aliphaten wie n-Hexan, Cyclohexan, Aromaten wie Benzol, Toluol, Xylol, Chlorbenzol, Ketone wie Aceton, Methylethylketon, Ester wie Essigsäureethylester, Säureamide wie Dimethylformamid und Ether wie Tetrahydrofuran oder Mischungen dieser Lösungungsmittel in Frage kommen.

Die Ethen-Oligo/Polymerisation kann sowohl kontinuierlich als auch diskontinuierlich durchgeführt werden.

Die Oligomerisations-bzw. Polmerisationstemperatur beträgt bevorzugt 20 bis 200°C, insbesondere von 60 bis 150° C.

Der anzuwendende Ethendruck beträgt mindestens 1 bar, bevorzugt sind 5 bis 1000 bar.

Für die Copolymerisation werden Cr-haltige Katalysatoren verwendet, vorzugsweise Chrom-(II)-und Chrom-(III)-Verbindungen, die sich auf einem Träger hoher Oberfläche befinden. Vorzugsweise sind die Chromverbindungen koordinativ ungesättigt. Silicium und Aluminiumoxide sowie Mischungen davon werden vorzugsweise als Träger verwendet. Es können aber auch andere übliche Träger eingesetzt werden. Besonders bevorzugte Träger sind Silicagele und Alluminiumoxidgele, vorzugsweise mit einer Oberfläche von 300 bis 600 $m^2/g$.

Die Herstellung der Cr-haltigen Katalysatoren erfolgt vorzugsweise in der aus der DE-A-3 427 319 bekannten Weise durch Auftragen einer Chrom-(VI)-Verbindung auf einen Träger, anschließende Aktivierung, Reduktion und übliche Weiterbehandlung.

Die Durchführung der 2. Stufe (Copolymerisation) kann in zwei Varianten durchgeführt werden:

a) Nach Bildung der gewünschten langkettigen $\alpha$-Olefine (1. Stufe) wird der Autoklav abgekühlt und entspannt, wobei nicht umgesetztes Ethen abgetrennt wird. Danach wird der Cr-Katalysator für die Copolymerisation (2. Stufe) unter Schutzgas, wie beispielsweise trockenem Argon, in den Autoklaven eingetragen das kurzkettige $\alpha$-Olefin eingebracht, sowie gegebenenfalls zusätzlich Ethen aufgedrückt und auf die gewünschte Reaktionstemperatur gebracht.

b) Von verfahrenstechnischem Vorteil kann es sein, den Cr-Katalysator über eine Schleuse in den für die 2. Stufe vollständig mit kurzkettigem $\alpha$-Olefin, sowie gegebenenfalls zusätzlichem Ethen, beschickten und temperierten Autoklaven zu bringen. Bei dieser Variante kann das Abkühlen und gegebenenfalls auch das Entspannen des Autoklaven entfallen, wenn überschüssiges Ethen in der 2. Stufe statistisch copolymerisiert werden soll.

Der allgemeine Temperaturbereich für die 2. Stufe reicht von -20°C bis +250°C. Bevorzugt wird bei +20°C bis +200°C gearbeitet. Durch die Wahl der Reaktionstemperatur kann das Molekulargewicht der erfindungsgemäßen verzweigten Niederdruckpolyolefine gesteuert werden. Temperaturerhöhung bedeutet hierbei eine Moleklargewichtserniedrigung.

Der Copolymerisationsschritt der 2. Stufe kann ebenfalls, wie für die 1. Stufe ausgeführt, in Gegenwart einer Organoaluminiumverbindung durchgeführt werden.

Bevorzugte nickelhaltige Katalysatoren sind die oben unter 1. bis 3. angegebenen Katalysatoren.

Bevorzugte chromhaltige Katalysatoren sind die oben angegebenenen Chrom-(II)-und Chrom-(III)-Verbindungen, insbesondere in Form von Trägerkatalysatoren.

Das erfindungsgemäße Verfahren ermöglicht es, verzweigte Niederdruckpolyolefine zu erhalten. Die erfindungsgemäßen neuen Polyolefine mit gleichzeitig verschieden langen Seitenketten zeigen überraschend wertvolle Eigenschaften.

Sie lassen sich z.B. als Modifikatoren und zur Herstellung von Formkörpern und Folien verwenden.

Beispiel

Für die Oligomerisation von Ethen wurde der folgende Ylid-Nickel-Katalysator verwendet

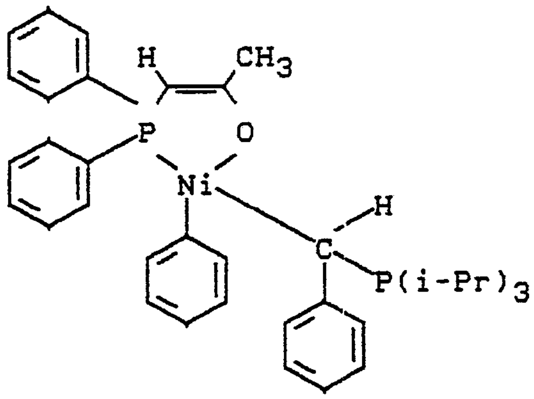

I

Er wurde in der 2. Stufe kombiniert mit einem heterogenen Oberflächen-Cr(II)-Katalysator (Träger Grace Typ 332), Gesamt-Chromgehalt: 1,01 % (Aktivierungs-Temp. 800°/Reduktions-Temp. 350° je 1 Stunde mit Sauerstoff bzw. Kohlenmonoxid).

Ethen-Oligomerisation und die Copolymerisation mit Propen wurde in einem 6 l-Autoklaven in einem Reaktor in zwei Stufen in 2.5 l n-Hexan durchgeführt:

1. Der Ylid-Nickel-Katalysator I wurde als Pulver (2,6 mmol = 1,6 g) unter Schutzgas eingebracht. Nach dem Aufdrücken von 400 g Ethen wurde auf 90°C aufgeheizt und 1 Stunde oligomerisiert (Umsatzca. 80 %). Nach dem Abkühlen wurde nicht umgesetz tes Ethen abgelassen und der Oberflächen-Chrom (II) Silikagel-Katalysator (ca. 58 g) im Argon-Gegenstrom zugegeben. Nach dem Aufdrücken von 840 g Propen und Aufheizen auf die gewünschte Temperatur wurde drei Stunden copolymerisiert. In Abhängigkeit von der Polymerisations-Temperatur wurden folgende Ergebnisse erhalten.

| Polym.Temp. T (°C) | Polymer-Ausbeute in g | $M_n$ | $M_w$ | U |
|---|---|---|---|---|
| 100 | 995 | 5286 | 10535 | 0,99 |
| 120 | 876 | 3915 | 6557 | 0,67 |
| 140 | 948 | 2601 | 5565 | 1,14 |
| 160 | 922 | 2229 | 5602 | 1,51 |
| 180 | 740 | | | |

Es bedeuten

$M_n$ Zahlenmittel des Molekulargewichtes

$M_w$ Gewichtsmittel des Molekulargewichtes

U = $(M_w/M_n)$-1 Molekular Uneinheitlichkeit

## Ansprüche

1. Verfahren zur Herstellung von verzweigten Niederdruckpolyolefine mit Polyethen-Ketten, dadurch gekennzeichnet, daß

1. Ethen an einem Ni-haltigen Katalysator oligomerisiert oder polymerisiert wird, und

2. diese Ethen-Polymerisate mit kurzkettigen $\alpha$-Olefinen mit wenigstens 3 C-Atomen an einem Cr-haltigen Katalysator polymerisiert werden,

wobei in Gegenwart von Aluminiumorganylen gearbeitet werden kann.

2. Verfahren nach Anspruch 1, dadurch gekennzeichnet, daß der nickelhaltige Katalysator ein Nickelkomplex ist, bei dem wenigstens ein Ligand Phosphor und Sauerstoff enthält.

3. Verfahren nach Anspruch 1, dadurch gekennzeichnet, daß der chromhaltige Katalysator ein Chrom-Trägerkatalysator ist.

4. Verfahren nach Anspruch 1, dadurch gekennzeichnet, daß Oligomerisierung bzw. Polymerisation und Copolymerisation im gleichen Reaktor nacheinander durchgeführt werden.

5. Verfahren nach Anspruch 1, dadurch gekennzeichnet, daß die nickel-und die chromhaltigen Verbindungen wenigstens zeitweise gleichzeitig im Reaktionsraum enthalten sind.

6. Verfahren nach wenigstens einem der vorhergehenden Ansprüche, dadurch gekennzeichnet, daß die Copolymerisation in Gegenwart von Ethen stattfindet.

7. Verzweigtes Niederdruckpolyolefin, dadurch gekennzeichnet, daß es wiederkehrende Einheiten eines polymerisierten α-Olefins mit wenigstens 3 C-Atomen und mindestens 1 Polyethen-Sequenz enthält.

8. Verzweigte Niederdruckpolyolefine gemäß Anspruch 7, dadurch gekennzeichnet, daß sie wiederkehrende Einheiten folgender Struktur aufweisen

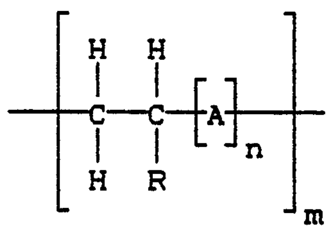

bzw.

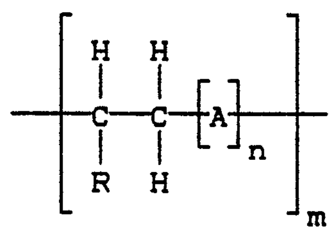

worin bedeuten

R Rest einer Polyethen-Seitenkette,

A wiederkehrende Strukturen eines polymerisierten α-Olefins mit wenigstens 3 C-Atomen oder eines solchen in statistischer Verteilung mit copolymerisierten Ethen-Einheiten,

n ganze Zahl und

m ganze Zahl.

9. Verzweigtes Niederdruckpolyolefin nach Anspruch 7, dadurch gekennzeichnet, daß die Polyethenäste unterschiedlich lang sind.